# EUROPÄISCHE PATENTSCHRIFT

(11) **EP 0 405 123 B1**
(45) Veröffentlichungstag und Bekanntmachung des Hinweises auf die Patenterteilung: **13.10.1993**
(21) Anmeldenummer: 90109430.0
(22) Anmeldetag: 18.05.1990
(51) Int. Cl.: F16F 9/46, B60G 17/08

(54) **Zweiwege-Magnetventil mit Bypass-Steuerung**
Two-way solenoid valve for bypass control
Soupape électromagnétique à deux sens pour réglage d'une dérivation

(30) Priorität: 29.06.1989 DE 3921239
(43) Veröffentlichungstag der Anmeldung: 02.01.1991
(73) Patentinhaber: AUGUST BILSTEIN GMBH & CO. KG, 58240 Ennepetal (DE)
(72) Erfinder: Herberg, Gerhard, D-5750 Menden 2 (DE)

(56) Entgegenhaltungen:
- DE-A- 3 348 176
- DE-A- 3 434 877
- DE-A- 3 542 097
- DE-A- 3 800 864
- DE-A- 3 823 430
- DE-A- 3 832 625
- FR-A- 2 609 129
- PATENT ABSTRACTS OF JAPAN, Band 10, Nr. 246 (M-501)[2302], 23. August 1986;& JP-A-59 197 092 (KOICHI MAEDA) 20-09-1984
- "Vibration control using Semi-Aktive Force Generators", ASME Journal of Engineering for Industry, Nr. 96 (1974), S.619-626,

## Beschreibung

Die Erfindung betrifft ein Zweiwege-Magnetventil zum Steuern eines hydraulischen Schwingungsdämpfers.

Aus der nachveröffentlichten, deutschen Offenlegungs - schrift DE-A-3 823 430, die als Ausgangspunkt der vorliegenden Erfindung dient, ist ein Gegenstand mit folgenden Merkmalen bekannt: Ein Zweiwege-Magnetventil zum Steuern eines hydraulischen Schwingungsdämpfers für ein semiaktives Fahrwerk, insbesondere für Kraftfahrzeuge, mit einem eine Dämpfungsflüssigkeit enthaltenden Zylinder, einer darin abgedichteten eintauchenden, axial verschiebbar angeordneten Kolbenstange, an deren innerem Ende ein Dämpfungskolben befestigt ist, der den Zylinderraum in zwei Arbeitskammern unterteilt und der mit veränderbaren Hauptströmungskanälen versehen ist, die durch Drosselventilkörper gesteuert werden und wobei zusätzlich ein Bypaß für die Druck- und Zugstufe vorhanden ist, der über einen axial angeordneten Elektromagneten gesteuert wird, dessen Anker als Ventilschieber für den Bypaß ausgebildet ist.

Die Aufgabe der Erfindung ist es, ein Zweiwege-Magnetventil für eine Schwingungsdämpfer mit einem elektromagnetisch betätigbaren axial beweglichen Ventilschieber zu schaffen, bei dem der Ventilschieber den Bypaßkanal zwischen den Arbeitsräumen des Schwingungsdämpfers immer nur in einer Bewegungsrichtung des Dämpfungskolbens freigibt und das Zweiwege-Magnetventil innerhalb des Dämpfungszylinders angeordnet ist.

Die Aufgabe wird durch die Merkmale des Patentanspruchs 1 gelöst.

Selbst bei Ausfall des Elektromagneten bleibt eine ausreichende Fahrsicherheit erhalten, da entweder die Zug- oder Druckstufe in Stellung hart steht, daß heißt, eine Bypaßpassage ist immer geschlossen.

Bei dem erfindungsgemäßen Zweiwege-Ventil wird immer nur eine Bewegungsrichtung (Zug oder Druck) gesteuert. Damit steht das Zwei-Wege-Ventil für den angesprochenen Fall, konstruktions-bedingt, in der richtigen Stellung. Außerdem liefert die Bypass-Steuerung eines Mindestkennung. Innerhalb des Arbeitskolbens befindet sich der Steuerschieber, was die Bauhöhe des Schwingungsdämpfers darüber hinaus noch reduziert.

Die Unteransprüche 2 bis 10 stellen vorteilhafte Ausgestaltungen der Erfindung dar.

In einer vorteilhaften Ausbildung der Erfindung sind die Querschnitte der Bypass-Kanäle unterschiedlich groß. Ein weiteres vorteilhaftes Merkmal der Erfindung besteht darin, daß der Ventilschieber ein rotationssystemmetrisches Bauteil ist und axial von der Kolbenstange geführt ist.

Um der Dämpfungsflüssigkeit keinen großen Strömungswiderstand entgegenzusetzen, weist der Ventilschieber vorteilhafterweise nur eine dünne Wandstärke auf.

In einer weiteren vorteilhaften Ausbildung weist der Ventilschieber an seinem rotationssymetrischen Umfang relativ großflächige, rechteckförmige Druchbrüche auf, um einen reibungslosen Durchfluß der Dämpfungsflüssigkeit zu gewährleisten.

Vorteilhafterweise ist die äußere Mantelfläche des Ventilschiebers in der Innenbohrung des Dämpferkolbens geführt.

Bei einer weiteren Ausbildung des erfindungsgemäßen Zweiwege-Magnetventils erfolgt der Zufluß der Dämpfungsflüssigkeit zum jeweiligen Bypaß-Kanal durch den Eintritt in den jeweiligen Hauptströmungskanal, von dem der jeweilige Bypaß-Kanal zur Innenbohrung des Dämpfungskolbens abzweigt.

Ein vorteilhaftes Merkmal der Erfindung besteht weiterhin darin, daß der bzw. die Bypaßkanäle für die Druckstufe und der bzw. die Bypaßkanäle für die Zugstufe an der Innenbohrung des Dämpfungskolbens gegeneinander in der Höhe versetzt auslaufen.

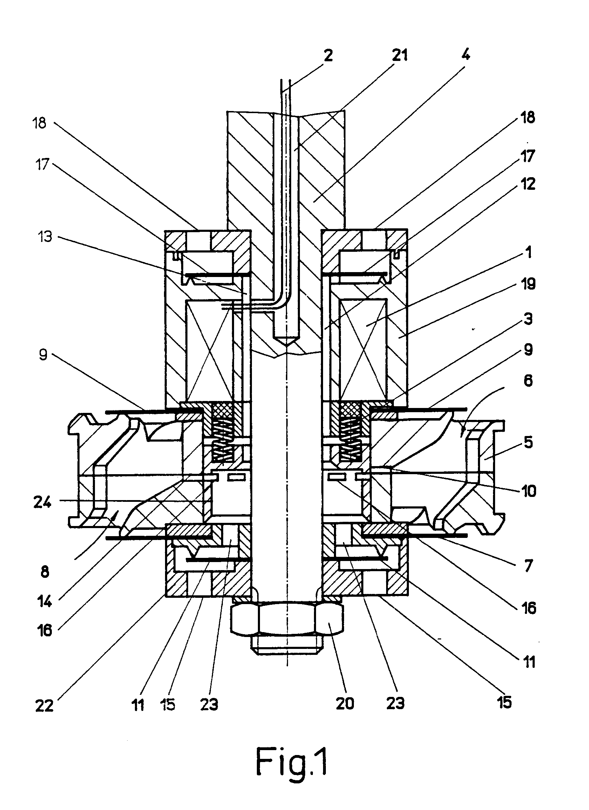

Die Erfindung soll an einem Ausführungsbeispiel, welches in Fig. 1 dargestellt ist, näher erläutert werden.

In einem nicht dargestellten Gehäuse eines Schwingungsdämpfers sitzt ein Dämpfungskolben 5, der an einer Kolbenstange 4 befestigt ist. Der Dämpfungskolben ist mit den Hauptströmungskanälen 6 für die Zugstufe und den Hauptströmungskanälen 8 für die Druckstufe ausgerüstet. Gleichzeitig sind die entsprechenden Ventile für die Zugstufe 7 und für die Druckstufe 9 angebracht. Oberhalb des Dämpfungskolbens 5 befindet sich in axialer Richtung das Gehäuse 19 des Bypasses für die Druckstufe. Der Mindestbypass 12 und 13 verläuft an der Kolbenstange entlang und tritt oberhalb eines axial sitzenden Elektromagneten aus. Der Verschluß des Mindestbypasses wird durch die Ventilscheiben 17 gebildet. An den Öffnungen 18 kann das Öl des Dämpfungsmediums der Druckstufe austreten.

Der Dämpfungskolben 5 ist aus zwei Teilen zusammengesetzt, die verdreht aufeinander liegen, so daß dadurch jeweils eine Eingangs- und eine Ausgangsseite des Hauptströmungskanals 6, 8 den gesamten Strömungskanal bilden. Jeweils an den Eingangsteilen der Strömungskanäle sind an der Trennfläche im Querschnitt Ausnehmungen 10, 14 angeordnet, die sich zur Innenbohrung (25) des Dämpfungskolbens erstrecken und mit dem jeweiligen Gegenteil einen Durchbruch bilden. Somit zweigt vom Hauptströmungskanal 6 für die Zugstufe der gesteuerte Bypass-Kanal ab wie in gleicher Weise vom Hauptströmungskanal 8 für die Druckstufe der Bypass-Kanal. Durch diesen Aufbau sind die Ausnehmungen 10 der Bypasskanäle für die Zugstufe gegenüber den Ausnehmungen 14 der Bypasskanäle für die Druckstufe axial gegeneinander versetzt. Der Ventilschieber 24, der gleichzeitig als federbelasteter Anker mit dem Elektromagneten 1 zusammenwirkt, wird mit seiner Außenwandung direkt im Innenbohrung des Dämpfungskolbens 5 geführt, welcher durch seine Ventilöffnungen 16 je nach Stellung des Ventilschiebers 24 die Bypass-Kanäle für die Zugstufe oder für die Druckstufe öffnet oder verschließt.

Unterhalb des Dämpfungskolbens 5 sitzt ein weiteres Teilgehäuse 22 des Bypasses für die Zugstufe. über die Durchbrüche 23 kann das Strömungsmedium der Zugstufe in den unteren Gehäusebereich 22 einströmen. Die Ventilscheiben 11 steuern den Ölstrom, der an den Austritten 15 heraus kann. Das gesamte Paket, bestehend aus dem Dämpfungskoben 5 und den-Gehäuseteilen 19 und 22, wird durch die Befestigung 20 unterhalb des Gehäuses 22 gehalten. Ferner befindet sich noch innerhalb des Dämpfungskolbens 5 der in axialer Richtung bewegliche Ventilschieber 24 für die zusätzliche Bypass-Steuerung. Der Ventilschieber 24 wird durch Federelemente 3 in seiner Grundstellung fixiert. In dieser Stellung ist es immer gewährleistet, daß eine Bypass-Öffnung auf Durchgang geschaltet ist. Der Ventilschieber 24 ist ein rotationssymmetrisches Drehteil, welches mit einer sehr dünnen Wandstärke ausgerüstet ist. Innerhalb dieser Wandstärke befinden sich Ventilöffnungen 16. Es ist deshalb eine relativ dünne Wandstärke gewählt worden, damit die Strömungswiderstände herabgesetzt werden. Gleichzeitig ist die Ausgestaltung der Ventilöffnungen 16 so gewählt worden, daß sich in radialer Richtung auf dem gesamten Umfang rechteckförmige Durchbrüche befinden. Dieses stellt einen reibungslosen Durchfluß des Öles dar und ruft nicht zusätzliche Widerstände, die z. B. durch runde Durchbrüche eine gewisse kapilare Wirkung ausüben können, dar. Auch wird aufgrund der rechteckigen Querschnitte der Querschnitt der Ventilöffnungen 16 vergrößert. Oberhalb des axial beweglichen Ventilschiebers 24 befindet sich ebenfalls in axialer Richtung ein Elektromagnet 1. Die elektrischen Anschlüsse 2 des Elektromagneten 1 sind innerhalb der Kolbenstange 4 durch einen Kanal 21 an den Elektromagneten 1 herangeführt. Wird der Elektromagnet 1 bestromt, so zieht der als Anker ausgebildete Ventilschieber 24 an und verschließt gleichzeitig die bis dahin geöffnete Bypass-Passage und öffnet gleichzeitig die andere Bypass-Passage. Diese Funktionsweise stellt sicher, daß immer eine Richtung des Bypasses geöffnet und eine Richtung geschlossen ist, d. h., die Kennung des Schwingungsdämpfers ist in einer Richtung weich und in der anderen hart. Wird die Bestromung des Elektromagneten 1 unterbrochen oder außer Kraft gesetzt, so fällt der Anker in seine Grundstellung zurück und bleibt gleichzeitig aufgrund der Federkräfte der Federelemente 3 in seiner Lage fixiert.

Ist z. B. die Druckstufe geöffnet, d. h., die Ventilöffnung 16 ist offen, so strömt das Dämpfungsmedium durch den Bypass-Kanal 13 gegen die Ventilscheibe 17 und kann an dem Austritt 18 austreten. In diesem Falle heißt es, die Druckstufe ist weich, das Rad kann schnell einfedern. Es werden keine oder relativ wenig Kräfte auf die Karosserie übertragen, die damit in Ruhe bleibt. Damit das Rad nicht weiterschwingen kann wird es im Umkehrpunkt der Schwingung abgebremst, da für diese Richtung die Zugstufe hart ist. Auf diese Weise wird die Schwingung schnell abgebaut. Mit der Erfindung ist es sichergestellt, daß in jedem Falle nicht beide Bewegungsrichtungen geöffnet sind. Dieses hat einen weiteren Vorteil, daß bei einem semiaktiven Fahrwerk, an welchem die Skyhook-Philosophie verwirklicht werden soll, der Skyhook-Algorithmus vereinfacht werden kann, d. h., es kann unter Umständen ein Sensor eingespart werden.

Der Elektromagnet 1 wird nicht dauernd bestromt, sondern er wird durch den angeschlossenen Rechner gesteuert.

Aufgrund der vorliegenden Erfindung kann für ein semiaktives Fahrwerk, welches nach dem Skyhook-Prinzip arbeiten soll, der Fahrkomfort gesteigert werden.

Das Skyhook-Prinzip beruht darauf, daß der Aufbau von der Straße entkoppelt und Stöße von der Fahrbahn isoliert werden. Dazu wird die Dämpfungskraft des Schwingungsdämpfers in zwei Stufen nach folgenden Algorithmus verstellt, wenn die Relativgeschwindigkeit zwischen Aufbau- und Radmasse des Fahrzeuges der vertikalen Aufbaugeschwindigkeit entgegengesetzt gerichtet ist, wird eine weiche Dämpfungskraft erzeugt und wenn beide gleichgerichtet sind, auf eine harte Dämpfungskraftkennlinie umgeschaltet. Daraus resultiert, daß bei einem Hindernis, nur in einer Bewegungsrichtung eine Änderung der Dämpfungskraft notwendig wird. Fährt z.B. das Fahrzeug über ein Hindernis, so muß das Rad einfedern, d.h. die Druckstufe des Schwingungsdämpfers muß weich sein, damit das Rad schnell einfedern kann und der Fahrzeugaufbau seine momentane Lage gegenüber der Fahrbahn beibehält. Für die Zugstufe des Schwingungsdämpfers bedeutet dies, sie muß hart sein, damit das Rad langsam wieder ausfedern kann, und die Schwingung abgebaut wird.

## Patentansprüche

1. Zweiwege-Magnetventil zum Steuern eines hydraulischen Schwingungsdämpfers für ein semiaktives Fahrwerk, insbesondere für Kraftfahrzeuge, mit einem eine Dämpfungsflüssigkeit enthaltenden Zylinder, einer darin abgedichteten eintauchenden, axial verschiebbar angeordneten Kolbenstange (4), an deren innerem Ende ein Dämpfungskolben (5) befestigt ist, der den Zylinderraum in zwei Arbeitskammern unterteilt und der mit veränderbaren Hauptströmungskanälen (6,8) versehen ist, die durch Drosselventilkörper (7,9) gesteuert werden, wobei zusätzlich ein Bypaß für die Druck- und Zugstufe vorhanden ist, der über einen axial angeordneten Elektromagneten (1) gesteuert wird, dessen Anker als Ventilschieber (24) für den Bypaß ausgebildet ist, der Ventilschieber (24) sich innerhalb des Dämpfungskolbens (5) befindet, der Bypaß aus einem Bypaßkanal (8,14,16,13,18) für die Druckstufe und aus einem Bypaßkanal (6,10,16,23,15) für die Zugstufe besteht, und wobei im stromlosen oder bestromten Zustand des Elektromagneten der Ventilschieber (24) entweder den Bypaßkanal für die Zugstufe oder den Bypaßkanal für die Druckstufe freigibt.

2. Ventil nach Anspruch 1, dadurch gekennzeichnet, daß im stromlosen Zustand des Elektromagneten der Bypass-Kanal für die Druckstufe geöffnet ist.

3. Ventil nach den Ansprüchen 1 und 2, dadurch gekennzeichnet, daß der Querschnitt der Bypass-Kanäle für die Zug- und Druckstufe unterschiedlich groß sein kann.

4. Ventil, nach den Ansprüchen 1 und 3, dadurch gekennzeichnet, daß der Ventilschieber (24) ein rotationssymmetrisches Bauteil ist und axial von der Kolbenstange (4) geführt wird.

5. Ventil nach den Ansprüchen 1 bis 4, dadurch gekennzeichnet, daß der Ventilschieber (24) eine sehr dünne Wandstärke hat und der Dämpfungsflüssigkeit keinen großen Strömungswiderstand entgegensetzt.

6. Ventil nach den Ansprüchen 1 bis 5, dadurch gekennzeichnet, daß der Ventilschieber (24) an seinem rotationssymmetrischen Umfang relativ großflächige, rechteckige Durchbrüche (16) hat.

7. Ventil nach den Ansprüchen 1 bis 6, dadurch gekennzeichnet, daß der Ventilschieber (24) im stromlosen Zustand des Elektromagneten durch Federelemente (3) axial in einer Grundstellung, gehalten wird und der bestromte Elektromagnet (1) beim Anzug des Ventilschieber (24) die Federkraft des Federelementes (3) überwindet.

8. Ventil nach Anspruch 1, dadurch gekennzeichnet, daß die äußere Mantelfläche des Ventilschiebers (24) in der Innenbohrung des Dämpfungskolbens (5) geführt wird.

9. Ventil nach Anspruch 1, dadurch gekennzeichnet, daß der Zufluß der Dämpfungsflüssigkeit zum jeweiligen Bypass-Kanal (10, 14) durch den Eintritt in den jeweiligen Hauptströmungskanal (6,8) erfolgt, von dem der jeweilige Bypass-Kanal zur Innenbohrung des Dämpfungskolbens (5) abzweigt.

10. Ventil nach Anspruch 9, dadurch gekennzeichnet, daß der bzw. die Bypass-Kanäle (10) für die Druckstufe und der bzw. die Bypass-Kanäle (14) für die Zugstufe an der Innenbohrung des Dämpfungskolbens (5) gegeneinander in der Höhe versetzt auslaufen.

## Claims

1. A two-way solenoid valve controlling a hydraulic vibration damper for a semi-active running gear, in particular for motor vehicles, having a cylinder containing damping fluid, furthermore a piston rod (4) which is axially displaceably disposed in the cylinder, the piston rod (4) penetrates the cylinder in a sealing manner and a damping piston (5) is attached to the internal end of the cylinder, the damping piston (5) sub-divides cylinder chamber into two working chambers and the damping cylinder (5) is provided with variable main flow ducts (6, 8) which are controlled by throttle valve members (7, 9) wherein a by-pass for the push and pull stage is also provided and this by-pass is controlled by way of an axially disposed solenoid whose armature is formed as a valve slide (24) for the by-pass, the valve slide (24) is located within the damping piston (5), the by-pass comprises a by-pass duct (8, 14, 16, 13, 18) for the push stage and a by-pass duct (6, 10, 16, 23, 15) for the pull stage and wherein the valve slide (24) reveals either the by-pass duct for the pull stage or the by-pass duct for the push stage in the non-energised or energised condition of the solenoid.

2. A valve according to claim 1, characterised in that when the solenoid is non-energised, the by-pass duct for the push stage is open.

3. A valve according to claims 1 and 2, characterised in that the cross section of the by-pass ducts for the pull and push stages can vary in size.

4. A valve according to claims 1 and 3, characterised in that the valve slide (24) is a rotationally symmetrical component and is guided axially by the piston rod (4).

5. A valve according to claims 1 to 4, characterised in that the valve slide (24) has an extremely thin wall and the damping fluid is not subjected to any large flow resistance.

6. A valve according to claims 1 to 5, characterised in that the valve slide (24) has relatively large area rectangular orifices (16) on its rotationally symmetrical periphery.

7. A valve according to claims 1 to [omitted in original German], characterised in that when the solenoid is non-energised, the valve slide (24) is held axially in a starting position by resilient elements (3) and when the solenoid (1) is energised, the resilient force of the resilient elements (3) is overcome upon pulling on the valve slide (24).

8. A valve according to claim 1, characterised in that the outer peripheral surface of the valve slide (24) is guided in the internal bore of the damping piston (5).

9. A valve according to claim 1, characterised in that the damping fluid flows to the respective by-pass duct (10, 14) through the entry in the respective main flow ducts (6, 8) from which the respective by-pass duct branches to the internal bore of the damping piston (5).

10. A valve according to claim 9, characterised in that the by-pass duct or ducts (10) for the push stage and the by-pass duct or ducts (14) for the pull stage exit at the internal bore of the damping piston (5) at a height offset to each other.

## Revendications

1. Vanne électromagnétique à deux voies pour commander un amortisseur de vibrations hydraulique pour un mécanisme de roulement semi-actif, en particulier pour des véhicules à moteur, avec un cylindre contenant un fluide amortisseur, une tige de piston (4) étanchéifiée, plongeant dans le dit cylindre, mobile axialement, à l'extrémité interne de laquelle est fixé un piston amortisseur (5) qui divise l'espace du cylindre en deux compartiments de travail et est pourvu de passages d'écoulement principaux réglables (6,8), qui sont commandés par des corps de soupape d'étranglement (7,9) dans lequel, de plus, il est prévu, pour les courses de traction et de pression, une dérivation commandée par un électro-aimant (1) disposé axialement, dont l'induit est réalisé en forme d'obturateur de vanne (24) pour la dérivation, l'obturateur de vanne (24) se trouve à l'intérieur du piston amortisseur (5), la dérivation se compose d'un canal de dérivation (8,14,16,13,18) pour la course de pression et d'un canal de dérivation (6, 10, 16, 23, 15) pour la course de traction, et dans lequel pour un état alimenté ou non-alimenté de l'électro-aimant, l'obturateur de vanne (24) libère soit le canal de dérivation pour la course de traction, soit le canal de dérivation pour la course de pression.

2. Vanne selon la revendication 1, caractérisée en ce que, dans un état non alimenté de l'électro-aimant, le canal de dérivation, pour la course de pression est ouvert.

3. Vanne selon les revendications 1 et 2, caractérisée en ce que la section des canaux de dérivation peut avoir une grandeur différente pour les courses de traction et de pression.

4. Vanne selon les revendications 1 et 3, caractérisée en ce que l'obturateur de vanne (24) est un élément à symétrie de rotation, et est guidé axialement par la tige de piston (4).

5. Vanne selon les revendications 1 à 4, caractérisée en ce que l'obturateur de vanne (24) présente une épaisseur de paroi très mince et n'oppose pas de résistance d'écoulement importante au liquide amortisseur.

6. Vanne selon les revendications 1 à 5, caractérisée en ce que l'obturateur de vanne (24) possède sur sa périphérie à symétrie de rotation des ouvertures (16) rectangulaires de superficie relativement importante.

7. Vanne selon les revendications 1 à 6, caractérisée en ce que, pour un état non alimenté de l'électro-aimant, l'obturateur de vanne (24) est maintenu axialement, par des éléments à ressort (3), dans une position initiale, et que l'électro-aimant (1) alimenté en courant doit vaincre la force de l'élément à ressort (3) lors de l'actionnement de l'obturateur de vanne (24).

8. Vanne selon la revendication 1, caractérisée en ce que la surface d'enveloppe extérieure de l'obturateur de vanne (24) est guidée dans l'alésage interne du piston amortisseur (5).

9. Vanne selon la revendication 1, caractérisée en ce que l'admission du liquide d'amortissement vers le canal de dérivation (10, 14) concerné s'effectue par l'entrée dans le canal principal d'écoulement correspondant (6, 8) a partir duquel chaque canal de dérivation bifurque en direction de l'alésage interne du piston amortisseur (5).

10. Vanne selon la revendication 9, caractérisée en ce que le ou les canaux de dérivation (10) pour la course de pression et le ou les canaux de dérivation (14) pour la course de traction s'étendent en position décalée en hauteur dans l'alésage interne du piston amortisseur (5).
